(19) Europäisches Patentamt
European Patent Office
Office européen des brevets

(11) **EP 1 780 225 A1**

(12) **EUROPEAN PATENT APPLICATION**

(43) Date of publication:
**02.05.2007 Bulletin 2007/18**

(51) Int Cl.:
***C08F 4/649*** (2006.01)     ***C08F 4/651*** (2006.01)

(21) Application number: **05256756.7**

(22) Date of filing: **01.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Borealis Technology Oy**
**06101 Porvoo (FI)**

(72) Inventors:
- **Lindroos, Jarmo**
  **3830 Ulefoss (NO)**
- **Bäckman, Mats**
  **41651 Göteborg (SE)**
- **Garoff, Thomas**
  **00840 Helsinki (FI)**

- **Idelmann, Peter**
  **42650 Västra Frölunda (SE)**
- **Johansson, Solveig**
  **44447 Stenungsund (SE)**
- **Ko, Young Soo**
  **Yusong-gu**
  **Taejon (KR)**
- **Stalhammar, Minna**
  **06450 Porvoo (FI)**
- **Waldvogel, Päivi**
  **06450 Porvoo (FI)**

(74) Representative: **Campbell, Neil Boyd**
**Frank B. Dehn & Co.**
**St Bride's House**
**10 Salisbury Square**
**London EC4Y 8JD (GB)**

(54) **Ziegler-Natta catalyst and its use to prepare multimodal polyolefin**

(57) The present invention provides a method for tailoring the molecular weight distribution of a multimodal (e.g. bimodal) ethylene polymer having a lower molecular weight component and a higher molecular weight component comprising polymerising ethylene and optionally at least one further alpha olefin in at least two stages, wherein at least one stage is carried out in a slurry phase in the presence of a Ziegler Natta catalyst comprising an electron donor which is an ether.

**EP 1 780 225 A1**

## Description

This invention relates to a method for tailoring the properties of multimodal ethylene polymers having lower and higher molecular weight components and to a method for making a multimodal ethylene polymer using a Ziegler Natta catalyst comprising a particular electron donor. The resulting polymers *per se* form another aspect of the invention. The invention further concerns catalysts for use in the afore-mentioned methods and to a process for producing said catalysts.

Ziegler Natta (ZN) catalysts are well known in the field of polymers. Generally they comprise a component formed from each of Groups 4-6 and 1-3 (e.g. Ti and Mg respectively) of the Periodic Table (ICTPAC) and optionally a compound of Group 13 or 14 (e.g. Al).

ZN catalysts may also comprise further components such as one or more cocatalysts and/or electron donors. Such components are often used to modify the properties of the catalyst. WO2004/055065, for example, discloses a ZN catalyst comprising an electron donor selected from ethers, amines, ketones or nitriles wherein the molar ratio of electron donor compound to Ti in the ZN catalysts is higher than 3.5. The catalyst is used for the preparation of unimodal LLDPE and is said to provide a more homogeneous distribution of the comonomer in and among the polymer chains than those catalysts lacking the electron donor.

WO00/58374 discloses similar ZN catalysts comprising tetrahydrofuran. In WO00/58374, however, the primary purpose of the THF is to reduce the level of electrostatic charge in the polymerisation medium so that agglomeration of polymer particles does not occur. The THF used for this purpose (i.e. reducing static electricity) is typically added into the polymerisation medium. In the examples of WO00/58374 the molar ratios of THF:Ti used are 3:1, 7:1, 2.5:1 and 10:1.

In WO02/074818 ZN catalysts comprising an electron donor selected from ethers, esters or amines are disclosed. The molar ratio of electron donor compound to Ti is preferably 1:2.5, more preferably 1:4. These catalysts also comprise a specific mixture of Ti in different oxidation states. The catalysts are used for the polymerisation of ethylene and yield polymers having a reduced oligomers content and/or improved mechanical properties.

However in none of these prior art documents is any mention made of the use of modified ZN catalysts in multistage polymerisation. In particular none of these documents in any way suggest the possibility of tailoring the properties of a multimodal ethylene polymer by using a modified ZN catalyst to influence the molecular weight distribution (MWD) of a higher molecular weight (HMW) component whilst essentially having no affect on the MWD of the lower molecular weight (LMW) component. As will be described in further detail below, the benefits that can be achieved by use of such a modified catalyst are considerable, especially if a multimodal ethylene copolymer, with homo and copolymer components produced in separate polymerisation stages, is prepared.

The broadness of a MWD may be described by the ratio of the weight average molecular weight (Mw) and the number average molecular weight (Mn). A high value of Mw/Mn (MWD) indicates a broad molecular weight distribution.

The MWD is a particularly important property of multimodal (e.g. bimodal) polymers. As indicated above, multimodal polymers comprise at least two components, one of which has a relatively higher molecular weight (i.e. a HMW component) and one of which has a relatively lower molecular weight (i.e. a LMW component). As is well known in the art, mixing polymer components of different molecular weights provides polymers having at least some of the advantageous properties of both components (e.g. the high processability of the lower molecular weight component and the high tensile, strength, toughness and impact strength of the higher molecular weight component). In order to ensure that a desirable combination of properties is obtained, however, it is necessary that the molecular weight, and in particular the MWD, of each component is controlled.

As is also known in the art, ZN catalysts tend to produce ethylene polymers having broad molecular weight distributions. Hence when ZN catalysts are used to produce multimodal (e.g. bimodal) polymers both the lower and the higher molecular weight components tend to have broad MWDs. In particular the HMW components tend to have significant lower molecular weight "tails" which have deleterious affects on the mechanical properties of the polymer and on articles made from the polymer. For example, films produced with a polymer prepared using a conventional ZN catalyst tend to have poor dart drop values and pipes made with polymer often exhibit weak pressure test results.

Methods which can provide multimodal polymers, and especially HMW components thereof, having a narrow MWD are therefore required. In particular methods which facilitate narrowing of the MWD of the HMW component from the low molecular weight side are desired. Such methods should not, however, substantially affect the MWD of the LMW component since it is important that the polymer remains highly processable.

US 5,055,535 discloses a method for controlling the MWD of polyethylene homopolymers and copolymers using a ZN catalyst comprising an electron donor selected from monoethers (e.g. tetrahydrofuran). US 5,055,535 demonstrates that use of the modified catalysts in a gas phase polymerisation of ethylene yields polymers having a MWD of 3 to 7. The use of the catalysts in a two stage polymerisation to produce a multimodal polymer is not, however, disclosed.

However EP-A-0754708 teaches use of a similar ZN catalyst modified with an electron donor in the synthesis of bimodal polymers and, in this case, little control over MWD is achieved. In EP-A-0754708 polymerisation is carried out in two gas phase stages with a ZN catalyst modified with, for example, tetrahydrofuran. The mole ratio of electron donor to Ti in the catalyst is about 1 -20 moles electron donor compound per mole of Ti. However, the bimodal polymers which result are said to have a broad molecular weight distribution (Mw/Mn of 10 to 80).

Hence, there is still a need for methods which provide multimodal, especially bimodal, ethylene polymers (preferably copolymers) having a narrow molecular weight distribution. In particular methods which produce multimodal polymers having a higher molecular weight component without a significant lower molecular weight tail are desired. At the same time, however, the method should not substantially impact upon the MWD of the lower molecular weight component since it plays an essential part in determining the properties of the final polymer, and in particular, in improving its processing properties.

Thus viewed from a first aspect the invention provides a method for tailoring the molecular weight distribution of a multimodal (e.g. bimodal) ethylene polymer having a lower molecular weight component and a higher molecular weight component comprising polymerising ethylene and optionally at least one further alpha olefin in at least two stages, wherein at least one stage is carried out in a slurry phase in the presence of a Ziegler Natta catalyst comprising an electron donor that is an ether.

In preferred methods of the present invention at least one stage is carried out in the gas phase. In still further preferred methods at least a first stage and a second stage are carried out in the presence of the same Ziegler Natta catalyst. Still more preferably the modified Ziegler Natta catalyst as hereinbefore described yields a higher molecular weight component having a narrower MWD than that provided by a conventional ZN catalyst but, at the same time, the modified ZN catalyst has substantially no affect on the MWD of the lower molecular weight component (i.e. its MWD is essentially the same as that produced using a conventional ZN catalyst).

Viewed from a further aspect the invention provides a method for preparing a multimodal (e.g. bimodal) ethylene polymer comprising:

in a first slurry phase stage, polymerising ethylene and optionally at least one further alpha olefin with a Ziegler Natta catalyst comprising an electron donor; and

in a second, preferably gas phase stage, polymerising ethylene and optionally at least one further alpha olefin in the presence of the same catalyst; wherein

said electron donor is an ether.

Particularly preferred embodiments of the present invention provide multimodal (e.g. bimodal) ethylene copolymers.

Viewed from a further aspect the invention provides polymers (e.g. copolymers) obtainable by a method as herein described.

Viewed from a yet further aspect the invention provides use of polymers (e.g. copolymers) as hereinbefore described for the manufacture of articles (e.g. film or pipe).

The term "tailoring the molecular weight distribution" implies the ability to adjust the MWD to a predetermined desired value, e.g. eliminating the molecular weight tail on the HMW component whilst not affecting the MWD of the LMW component.

As used herein the term "multimodal" is intended to cover polymers having at least two differently centred maxima along the x-axis of their molecular weight distribution curve as determined by gel permeation chromatography. In such a curve d(log(MW)) is plotted as ordinate against log (MW), where MW is molecular weight. In a preferred embodiment of the present invention, the polymer (e.g. copolymer) is bimodal.

The term "copolymer" as used herein is intended to encompass polymers comprising repeat units from two or more monomers. In typical ethylene copolymers, ethylene forms the largest monomer present. The desired amount of comonomer depends on the desired properties of the polymer. Typical amounts of comonomers in a polymer produced in a two stage slurry-gas phase polymerisation is about 1-10 % by weight of the final polymer. However higher comonomer amounts, e.g. up to 20 % by weight of final polymer are possible.

In contrast the term "homopolymer" as used herein is intended to encompass polymers which consist essentially of repeat units deriving from a single monomer. Homopolymers may, for example, comprise at least 99 %, preferably at least 99.5 %, more preferably at least 99.9 % by weight of repeat units deriving from a single monomer.

As used herein the term "Ziegler Natta (ZN) catalyst" is intended to cover any catalyst comprising a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC) and optionally a compound of Group 13 or 14 of the Periodic Table (IUPAC). ZN catalysts may additionally comprise one or more cocatalysts and/or activators.

Preferably the compound of Group 4 to 6 is a titanium compound. Particularly preferably the titanium compound is a halogen containing titanium compound, e.g. a chlorine containing titanium compound. Still more preferably the titanium compound is titanium tetrachloride.

Preferably the compound of Group 1 to 3 is a magnesium compound. More preferably the magnesium compound is the reaction product of a magnesium dialkyl and an alcohol (e.g. a $C_{2-16}$ alcohol). The magnesium dialkyl compound may be any compound in which magnesium is bonded to two alkyl (e.g. $C_{1-18}$) groups. A preferred example of a magnesium dialkyl compound is butyl-octyl-magnesium. The alcohol may be linear or branched although branched alcohols are preferred. 2-Ethyl-1-hexanol is an example of a preferred alcohol.

Preferably the compound of Group 13 or 14 is an aluminium compound or a boron compound, more preferably an aluminium compound. Particularly preferably the aluminium compound is an aluminium alkyl compound, especially a chlorine containing aluminium alkyl compound. Still more preferably the aluminium compound is an aluminium alkyl dichloride or an aluminium alkyl sesquichloride. Ethyl-aluminium-dichloride (EADC) is particularly preferred.

The ZN catalysts for use in the method of the invention may be supported or unsupported. Preferred catalysts are supported. Typical supports comprise inorganic oxide (e.g. silica, alumina, titania, silica-alumina and silica-titania) or magnesium chloride.

ZN catalysts supported on an inorganic oxide may be prepared by any conventional method known in the art. For example, the catalyst may be prepared by sequentially contacting the inorganic oxide with the compounds of Groups 4-6, 1-3 and 13-14 as described in EP-A-688794. Alternatively the catalyst may be prepared by first preparing a solution from the compounds of Groups 4-6, 1-3 and 13 and then contacting the solution with the inorganic oxide as described in WO-A-01/55230. A particularly preferred supported catalyst for use in the method of the present invention is prepared according to the method described in EP-A-0949274, the entire contents of which are incorporated herein. Catalysts prepared according to this method have high activities in a range of polymerisation conditions (e.g. during production of both lower and higher molecular weight components).

Further preferred catalysts for use in the method of the present invention comprise a support formed according to the method described in WO2004/055068 the entire contents of which are incorporated herein. These supports are formed by mixing a solution comprising a magnesium hydrocarbyloxy compound and a solution comprising a halogen containing compound of Group 13 or 14 of the Periodic Table (IUPAC). The resulting solid is recovered from the reaction mixture and optionally washed prior to treatment with a catalytically active compound of Groups 4-6 of the Periodic Table.

The ZN catalysts for use in the present invention may additionally comprise one or more conventional cocatalysts and/or activators. Typical cocatalysts include aluminium alkyl compounds, e.g. aluminium trialkyl compounds. A particularly preferred cocatalyst is triethyl aluminium (TEA).

The electron donor present in the ZN catalysts used in the method of the present invention is an ether and may comprise 2 to 20 carbon atoms (e.g. 2 to 18 carbon atoms). Particularly preferred electron donors are alkyl (e.g. cycloalkyl) ethers having 2 to 18 carbon atoms.

Still more preferred electron donors are alkyl ethers of the formula $R^1OR^2$ wherein R' and $R^2$, which may be identical or different, are $C_{1-8}$ alkyl or together form a ring comprising 4 to 12 carbon atoms. Preferably $R^1$ and $R^2$ form a ring, e.g. a ring comprising 4 to 6 carbon atoms. Preferred alkyl ethers for use as electron donors in the catalyst include diethyl ether, n-dibutylether, s-dibutylethyl, dioctylethers, tetrahydropyran, 3-methyltetrahydropyran, 2-methylterahydrofuran, and tetrahydrofuran. Tetrahydrofuran is a particularly preferred electron donor.

ZN catalysts for use in the method of the present invention may have a molar ratio of electron donor to Ti is 0.1 to 2.5:1, preferably 0.5 to 2.0: 1, more preferably 0.7 to 1.8:1, still more preferably 1.0 to 1.6:1, e.g. about 1.2 to 1.5: 1, especially about 1.5:1. Certain ZN catalysts comprising a molar ratio of electron donor to Ti of 0.1 to 1.5:1, preferably 1.2 to 1.4:1 (e.g. about 1.5:1) are particularly advantageous and provide polymers having a very narrow molecular weight distribution as well as a high molecular weight. Thus viewed from a further aspect the present invention provides a ZN catalyst comprising an ether electron donor, wherein the molar ratio of electron donor to Ti in said catalyst is 0.1 to 1.6:1.

ZN catalysts comprising an electron donor can be prepared by various different methods. For example, the electron donor may be introduced during the synthesis of the catalyst (e.g. at the same time as the compound of Group 4-6). Preferably, however, the ZN catalyst is pre-formed and then contacted with an electron donor and optionally dried. Contact can be achieved by, for example, mixing the catalyst and the electron donor in appropriate amounts. Usually little, or no, excess of electron donor is required (e.g. a stoichiometric amount of electron donor may be used). The catalyst/electron donor mixture may optionally be heated, e.g. to 30-90 °C during this mixing. Subsequent drying may be carried out in accordance with methods conventional in the art.

Thus viewed from a still further aspect the invention provides a method for making a ZN catalyst comprising an ether electron donor wherein the molar ratio of electron donor to Ti in said catalyst is 0.1 to 1.6:1, said method comprising mixing said ZN catalyst with said electron donor in an appropriate amount and optionally drying.

The catalysts hereinbefore described are employed in multistage polymerisation (e.g. polymerisation in at least two stages). In such a polymerisation the reactors are connected in series such that the products of one reactor are used as the starting materials in the next reactor. The polymerisation may be carried out continuously or batch wise.

The first stage is preferably carried out in the slurry phase. Preferably the first stage produces a lower molecular weight component. A second stage is preferably carried out in the gas phase. Preferably the second stage produces a higher molecular weight component. In a preferred polymerisation process, one slurry phase and one gas phase is carried out. In particularly preferred processes, one slurry phase is followed by one gas phase.

The slurry and gas stages may be carried out using any conventional reactors known in the art. A slurry phase polymerisation may, for example, be carried out in a continuous stirred tank reactor, a batch-wise operating stirred tank reactor or a loop reactor. Preferably slurry phase polymerisation is carried out in a loop reactor. The term gas phase reactor encompasses any mechanically mixed or fluidised bed reactor. Preferably the gas phase reactor is a fluidised bed reactor.

The reactor system may additionally comprise other reactors, e.g. for pre-polymerisation. Pre-polymerisation may be used, for example, to provide the catalyst in a solid particulate form or to activate the catalyst. In a typical pre-polymerisation, monomer (e.g. ethylene) is polymerised with catalyst as hereinbefore described to yield, for example, 0.1 to 1000 g polymer per gram of catalyst. The polymer formed during pre-polymerisation forms less than 10 % by weight, preferably less than 7 % by weight, typically less than 5 % by weight of the total weight of the final polymer. Still more preferably only 2-3 % of the total weight of the polymer is formed during any prepolymerisation step. A pre-polymerisation is therefore not intended to represent one of the stages of the multistage polymerisation process hereinbefore described.

To produce the ethylene polymer according to the method of the present invention, ethylene and preferably at least one other alpha olefin are polymerised in the presence of a catalyst as hereinbefore described. Representative examples of olefins which may be polymerised with ethylene in either stage include $C_{3-20}$, singly or multiply ethylenically unsaturated, monomers (e.g. $C_{3-10}$ $\alpha$-olefins). Particularly preferred comonomers include propylene, 1-butene, 1-hexene and 4-methylpent-1-ene.

In a preferred method of the present invention, the majority of monomers in the formed polymer are ethylene. More preferably at least 80 % by weight, still more preferably ay least 90 % by weight (e.g. at least 95 % by weight) monomers are ethylene. The remaining comonomers may derive from any other copolymerisable monomers, generally $C_{3-20}$ (e.g. $C_{3-10}$) comonomers. Preferred comonomers are as hereinbefore described.

In a particularly preferred method of the invention the polymer produced in the first stage preferably comprises 10 to 90 % by weight, more preferably 30 to 70, still more preferably 40 to 60 % by weight of the total weight of the final polymer. Preferably this polymer is an ethylene homopolymer. Still more preferably the polymer (e.g. ethylene homopolymer) produced in the first stage is the LMW component. An important feature of the methods of the present invention is that it has surprisingly been found that the make up (e.g. MWD) of a LMW ethylene polymer (e.g. homopolymer) is essentially unaffected by the presence of the electron donor on the Ziegler-Natta catalyst (i.e. it is essentially identical to the LMW component produced in conventional ZN catalysis).

The polymerisation medium typically comprises ethylene, a diluent and catalyst as hereinbefore described. The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator. In a typical slurry phase polymerisation the temperature is preferably in the range 40 to 110 °C, preferably 70 to 100 °C. The reaction pressure is typically 25 to 100 bar, preferably 35 to 80 bar.

The resulting ethylene polymer typically produced in a full scale two stage polymerisation process preferably has a $MFR_2$ of 10 to 1000 g/10 min, preferably 300 to 500 g/10 min, e.g. about 400 g/10 min as measured according to ISO 1133 at 190 °C and under 2.16 kg load. The weight average molecular weight of preferred ethylene homopolymer (preferably produced in the first slurry phase stage) is in the range 8,000 to 100,000, more preferably 10,000 to 50,000, still more preferably 12,000 to 40,000, e.g. 15,000 to 25,000 as measured by gel permeation chromatography. Preferred ethylene homopolymer may also have a molecular weight distribution of 5 to 15, more preferably 7 to 12, e.g. 8 to 10.

Polymerisation in the first reactor (e.g. a loop reactor) is typically carried out for 10 to 180 minutes, preferably 30 to 120 minutes, e.g. about 60 minutes. At least part of the volatile components of the reaction medium (e.g. hydrogen) may then be removed. The product stream is then be subjected to a second polymerisation stage.

The second polymerisation is preferably carried out using a catalyst as hereinbefore described. Particularly preferably the same catalyst is used in both stages (i.e. no fresh catalyst is added in the second stage).

In the second polymerisation stage the HMW component of the multimodal (e.g. bimodal) polymer is preferably produced. The second stage is preferably carried out in the gas phase. The polymer produced in the second stage is preferably a copolymer. The polymer produced in the second stage preferably comprises 90 to 10 %, preferably 70 to 30 %, more preferably 60 to 40 % by weight of the total copolymer composition (i.e. the LMW:HMW component weight ratio is preferably 10:90 to 90:10, preferably 30:70 to 70:30, more preferably 40:60 to 60:40). A further key feature of the present invention is that it has surprisingly been found that the presence of an ether electron donor, in particular at the electron donor:Ti ratios described herein, gives rise to a higher molecular weight component of particularly narrow molecular weight distribution. More specifically it has been found that the presence of an ether electron donor in the ZN catalyst makes the MWD of the HMW component more narrow from the lower molecular weight side. The combination therefore of the ZN catalyst of the invention and the multistage polymerisation claimed where a LMW polymer (homopolymer or copolymer, preferably homopolymer) then a HMW polymer (preferably copolymer) are formed, allows control of the molecular weight on the HMW component without detrimentally affecting the LMW component. This allows improvements in mechanical properties to be achieved without affecting processability.

Thus, the MWD of the HMW component, typically produced second in a full scale two stage polymerisation process, may be less than 6, e.g. less than 5.5, preferably less than 5. The properties of the HMW component cannot be measured directly as the polymer material isolated form the second reactor will be an intimate mixture of the LMW and HMW components.

Nevertheless, the properties of the second component can be derived from an analysis of the LMW component and the final polymer. Such calculations can be carried out using various techniques, e.g. K. B. McAuley: Modelling, Estimation and Control of Product Properties in a Gas Phase Polyethylene Reactor. Thesis, McMaster University, August 1991. or K. McAuley and J. McMacGregor, AIChE Journal, Vol. 37, no. 6, pages 825 - 835. B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13. In addition, subtracting GPC curves, when fractions of each polymer are known is possible.

As stated above, the final polymer can have a monomer content of up to 20 wt %. More preferably, however, the final polymer has a monomer content of up to 15 wt%, still more preferably up to 10 wt%. If the polymer is produced in a two stage process, the amount of comonomer in the polymer produced in the second stage can be calculated based on the final amount present in the polymer, the amount in the polymer produced in the first stage and on the production split between the first and second stages.

The polymerisation medium in the second stage typically comprises ethylene, comonomers (e.g. 1-butene, 1-hexene, or octene) and optionally hydrogen. Gas phase reactors are typically operated at temperatures of 50 to 115 °C, preferably 60 to 100 °C. The reaction pressure is preferably between 10 and 40 bar.

The final copolymer which results preferably has a $MFR_5$ of 0.1 to 100 g/10 min, preferably 0.2 to 30 g/10 min, more preferably 0.4 to 15 g/10 min, still more preferably 0.5 to 6 g/10 min, e.g. about 0.5 to 2 g/10 min as measured according to ISO 1133 at 190 °C and under 5 kg load. A preferred copolymer is also that having a $MFR_{21}$ of 3 to 200 g/10 min, preferably 6-90 g/10 min as measured according to ISO 1133 at 190 °C under a 21.6 kg load.

The weight average molecular weight of preferred final polymer (e.g. ethylene polymer produced in a two stage polymerisation) is in the range 40,000 to 600,000, more preferably 50,000 to 500,000, still more preferably 100,000 to 400,000 as measured by gel permeation chromatography. Preferred final polymer (e.g. ethylene copolymer) may also have a molecular weight distribution of 10 to 50, preferably 20 to 40. The final MWD of the polymer produced by a two stage polymerisation process is the result of the MWDs produced in each stage.

The ethylene polymer produced by the method of the current invention may be high density polyethylene, medium density polyethylene or linear low density polyethylene. Preferably the method of the present invention is used to make linear low density polyethylene. LLDPE preferably has a density of 888 to 940 kg/m$^3$, more preferably 905 to 935 kg/m$^3$, still more preferably 915 to 930 kg/m$^3$, e.g. about 920 kg/m$^3$. Preferred ethylene polymer may also have a crystallinity of 5 to 55 %, e.g. 30 to 50 %.

In a highly preferred embodiment therefore the invention provides a process for preparing a multimodal (e.g. bimodal) ethylene copolymer comprising:

in a first slurry phase stage, polymerising ethylene with a Ziegler Natta catalyst comprising an electron donor; and
in a second gas phase stage, polymerising ethylene and at least one further alpha olefin in the presence of the same catalyst; wherein
said electron donor is THF and the molar ratio of THF to Ti in the catalyst is 0.1:1 to 1.6:1.

The polymer of the present invention may also comprise conventional additives such as antioxidants, UV stabilisers, acid scavengers, anti-blocking agents polymer processing agent etc. The amounts of these compounds may be readily determined by those skilled in the art. These may be added to the polymer using conventional techniques.

The polymers produced according to the method of the present invention may be used to manufacture articles such as films and pipes. The polymers may, for example, be used be used to form a complete film or a layer of a multilayer film. The film may be produced by any conventional technique known in the art, e.g. blowing or casting. Films made using the polymer of the invention exhibit high dart impact strengths and a low number of gels.

Pipes may be made from the polymers produced according to the present invention by any conventional technique, e.g. extrusion. As already mentioned the inclusion of the LMW component in the polymer enhances process ability, whilst the narrower MWD of the polymer as a whole (largely due to the avoidance of a low molecular weight tail on the HMW component) ensures that pipes can withstand high pressures.

The invention will now be described in more detail in the following nonlimiting examples.

EXAMPLES

**Analytical Methods**

Density (kg/m$^3$) was measured according to ISO 1183

Melt flow rates (MFR) are measured under a load of 2.16, 5 and 21.6 kg and at 190 °C according to ISO 1133.

| | |
|---|---|
| Mw, Mn and MWD are measured by GPC. | |
| Equipment: | Alliance GPCV 2000 |
| Solvent/eluent: | 1,2,4-trichlorobenzene (TCB)/stabilised with 2,6-t-butyl-4-methlyphenol |
| Temperature 140 °C | |
| Detector: | Refractive Index (RI) and Visc detector |
| Calibration: | Narrow MWD PS and broad MWD PE |
| Columns: | Two mixed bed and one 10$^7$ Angstrom column (available from Tosohaas) |

Melt temperatures (°C) were measured with differential scanning calorimetry (DSC) according to the following method:

1) Melting at 180 °C for 5 minutes
2) Crystallising from 180 °C to 0 °C with a cooling rate of 10 °C/minute
3) Melting from 0 °C to 180 °C with a heating rate of 10 °C/minute

Crystallinity was calculated from the melting curve using the equation

$$\Delta H_{sample}/\Delta H_{100\%}$$

$$\Delta H_{100\%} = 290 \text{ J/g was used for } 100\% \text{ crystalline PE}.$$

XS (%) was determined according to method ISO 6427.

Rheology of the polymers was determined by frequency sweep at 190°C under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity ($\eta$*), all as a function of frequency ($\omega$) These parameters are related as follows: For any frequency $\omega$: The complex modulus: $G^* = (G'^2 + G''^2)^{1/2}$. The complex viscosity: $\eta^* = G^*/\omega$.

According to the empirical Cox-Merz rule, for a given polymer and temperature, the complex viscosity as function of frequency (given in rad/s) measured by this dynamic method is the same as the viscosity as a function of shear rate for steady state flow (e.g. a capillary).

Shear thinning, that is the decrease of viscosity with G*, becomes more pronounced when the molecular weight distribution (e.g. as measured by SEC for linear polymers) broadens. This property can be characterised by the shear thinning index, SHI, which is the ratio of the viscosity at a lower stress and the viscosity at a higher shear stress. A polymer with broad molecular weight distribution will have a higher SHI than one with a more narrow. Two polymers of equal molecular weight distribution broadness as seen by SEC, but of different molecular weights, will have about equal SHI. In the examples, shear stresses (or G*) of 1 and 100 kPa were used as basis. Thus:

$$SHI\_1\_kPa/100\_Pa = \eta^* (G^* = 1kPa)/\eta^* (G^* = 100 \text{ kPa})$$

**Example 1**

POLYMERISATION WITH A SILICA-BASED ZN CATALYST (Bench-scale batch slurry polymerisations):

Catalyst synthesis

Catalyst was synthesized according to example 1 of EP949274. Following addition of $TiCl_4$ (before drying), THF was added (to yield catalyst having a molar ratio of THF to Ti as shown in Table 1) and mixed for 2 h at 40 -50°C. The resulting catalyst was then dried according to example 1 in EP949274.

Homopolymerisation

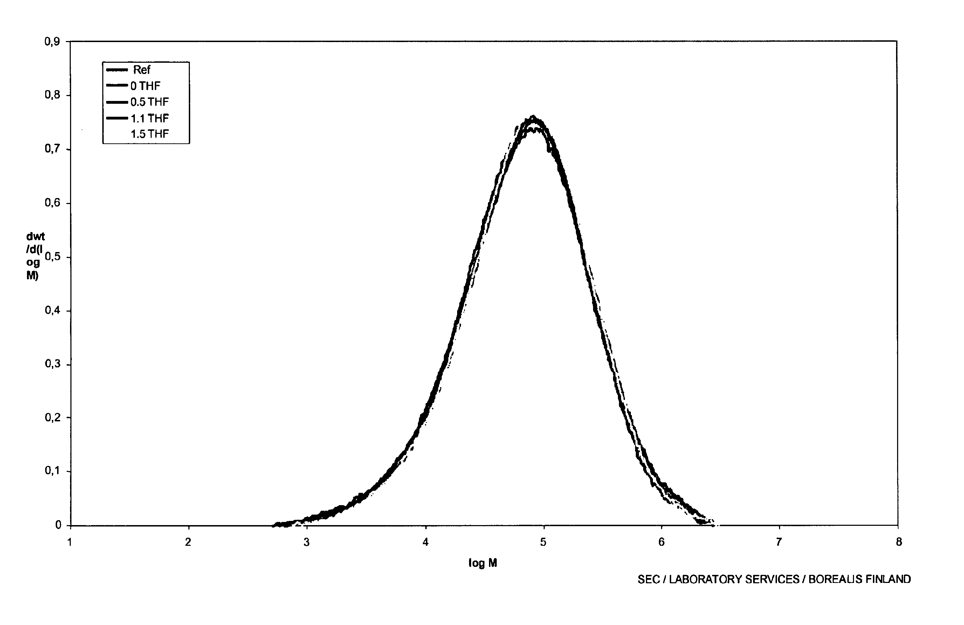

A 3 litre autoclave reactor was used. 1800 ml (987 g, 17,0 mol) of pentane was introduced into the reactor as reaction medium. The temperature of the reactor system was set to 90°C and the catalyst (prepared according to the method described above) and the co-catalyst were fed into the reactor by means of two feed vessels. TEA was used as co-catalyst with Al/Ti molar ratio of 15. Dry catalyst (50 mg) was added together with 10 ml (6.3 g, 87 mmol) of pentane. The polymerisation was started by opening the ethylene valve; hydrogen (5 bar of $H_2$ in 500 ml vessel) was flushed into reactor with ethylene. A total pressure of 14.7 bar was maintained by the ethylene feed throughout the polymerisation. The polymerisation was carried out at 90°C for 1 hr after which it was stopped by venting off the monomer and pentane. The characteristics of the resulting homopolymer are shown in Table 1 below and in Figure 1.

Table 1

|  | Reference* | 0.0 THF# | 0.5THF: 1Ti | 1.1 THF: 1Ti | 1.5 THF: 1Ti |
|---|---|---|---|---|---|
| Polymerisation | 1 | 2 | 3 | 4 | 5 |
| Activity (kg/g cat h) | 5.5 | 5.3 | 6.3 | 5.2 | 4.7 |
| MFR$_5$(g/10min) | 2.7 | 2.8 | 3.3 | 3.0 | 3.3 |
| MFR$_{21}$(g/10min) | 28.2 | 28.5 | 32.1 | 30.5 | 33 |
| MW (GPC) | 150,000 | 136,000 | 143,000 | 149,000 | 145,000 |
| MN | 26,100 | 27,300 | 27,100 | 26,900 | 30,800 |
| MWD | 5.7 | 5.0 | 5.3 | 5.5 | 4.7 |
| ETA (1kPa) | 11,900 | 11,000 | 9500 | 10,300 | 8900 |
| SHI (1/100) | 4.5 | 5.1 | 4.4 | 4.1 | 3.8 |
| * Neat catalyst # C5 without THF | | | | | |

It can be seen from Table 1 and Figure 1 that essentially no changes occur in the polymer obtained by homopolymerisation.

Copolymerisation

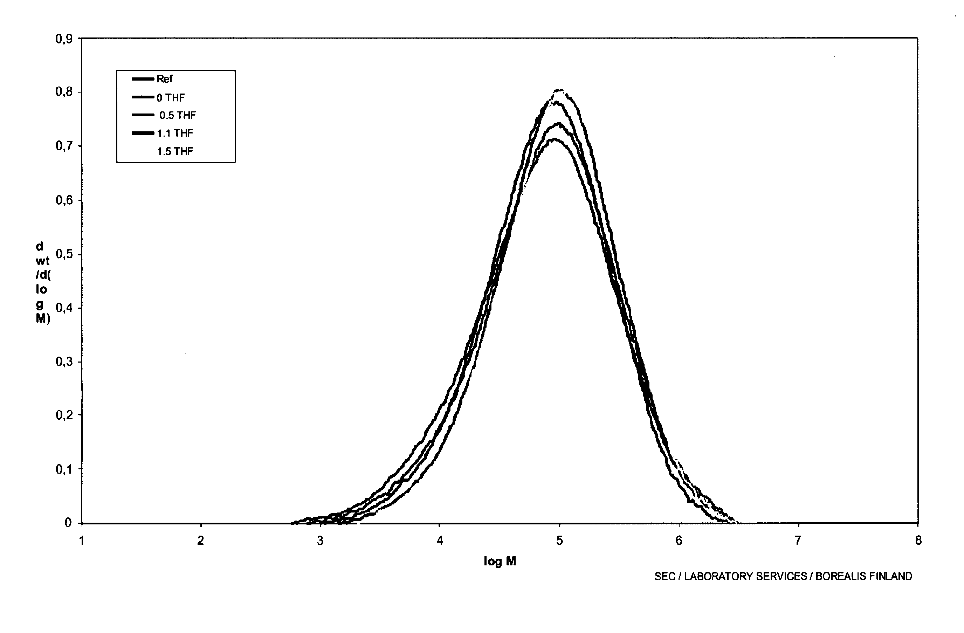

A 3 litre autoclave reactor was used. 1800 ml (987 g, 17,0 mol) of *i*-butane was introduced into the reactor as reaction medium. The temperature of the reactor system was set to 85°C and the catalyst (as prepared above) and the co-catalyst were fed into the reactor by means of two feed vessels. TEA was used as co-catalyst and an Al/Ti molar ratio of 15 was used. About 50 mg of the dry catalyst was added together with 10 ml (6.3 g, 87 mmol) of pentane. 150 ml (89,3 g, 1,59 mol) of 1-butene was added. 1 bar of $H_2$ pressure was added (in 500 ml feed vessel; 22,3 mmol). The polymerisation was started by opening the monomer feed line and thereby introducing both the co-monomer and the $H_2$ together with the monomer. A total pressure of 22.5 bar was maintained by the ethylene feed throughout the polymerisation. The co-polymerisation was carried out at 85°C until 200 g of polymer was produced. The polymerisation was stopped by venting off the monomer and *i*-butane. The characteristics of the resulting copolymer are shown in Table 2 below and in Figure 2.

Table 2

| | Reference* | 0.0 THF# | 0.5THF: 1Ti | 1.1 THF :1Ti | 1.5 THF: 1Ti |
|---|---|---|---|---|---|
| Polymerisation | 1 | 2 | 3 | 4 | 5 |
| Activity (kg/g cat h) | 11.1 | 13.6 | 13.3 | 13.0 | 12.4 |
| 1-butene content (wt%) | 5.5 | 5.0 | 4.7 | 4.0 | 3.8 |
| Density (kg/m$^3$) | 926.3 | 926.8 | 926.9 | 926.9 | 927.7 |
| MFR$_5$(g/10min) | 2.1 | 1.7 | 2.4 | 1.4 | 1.3 |
| MFR$_{21}$ (g/10 min) | 23.3 | 17.1 | 22.9 | 13.8 | 13.0 |
| MW (GPC) | 164,000 | 176,000 | 151,000 | 177,000 | 184,000 |
| | Reference* | 0.0 THF# | 0.5THF 1Ti | 1.1 THF :1Ti | 1.5 THF: 1Ti |
| MN | 26,700 | 32,200 | 35,500 | 43,700 | 47,900 |
| MWD | 6.2 | 5.5 | 4.2 | 4.0 | 3.8 |
| ETA (1kPa) | 17,100 | 19,300 | 13,400 | 21,100 | 22,600 |
| SHI (1/100) | 4.7 | 4.2 | 3.8 | 3.7 | 3.7 |
| * Neat catalyst<br># C5 without THF | | | | | |

It can be seen from Table 2 and Figure 2 that co-polymerisation with a catalyst pre-treated with THF provides a copolymer having a narrower MWD, especially as the THF/Ti ratio is increased. As can be seen from the GPC curve (in Figure 2) this is due to the production of less low molecular weight polymer.

**Example 2**

POLYMERISATION RESULTS for MAGNESIUM CHLORIDE-BASED ZN CATALYST (Bench-scale batch slurry polymerisations)

Catalyst synthesis

The catalyst is synthesized according to example 1 of WO 2004/055068. THF treatment of the catalyst was done in a following manner: 18.219 g of the catalyst was added into a reactor with 10 ml of heptane. THF was then added (approx. THF/Ti = 1 mol/mol) and the slurry was mixed at room temperature for 2 hours.

Polymerisation

A 3 litre autoclave reactor was used. 1800 ml (987 g, 17,0 mol) of *i*-butane was introduced into the reactor as reaction medium. The temperature of the reactor system was set to 85 °C and the catalyst (as prepared above in example 2) and the co-catalyst were fed into the reactor by means of two feed vessels. TEA was used as co-catalyst and an Al/Ti molar ratio of 9-15 was used. About 250 mg of the catalyst oil slurry (0,3 ml, 10 mg catalyst) was added together with 10 ml (6.3 g, 87 mmol) of pentane. 150 ml (89,3 g, 1,59 mol) of 1-butene was added. 1 bar of H$_2$ pressure was added (in 500 ml feed vessel; 22,3 mmol). The polymerisation was started by opening the monomer feed line and thereby introducing both the co-monomer and the H$_2$ together with the monomer. A total pressure of 22.5 bar was maintained by the ethylene feed throughout the polymerisation. The co-polymerisation was carried out at 85 °C until 200 g of polymer was produced. The polymerisation was stopped by venting off the monomer and *i*-butane. The characteristics of the resulting copolymer are shown in Table 3 below.

Table 3

| | Reference* | 0.5THF:1Ti | 1.1 THF: 1Ti | 1.5 THF:ITi |
|---|---|---|---|---|
| Polymerisation | 1 | 3 | 4 | 5 |
| Activity (kg/g Ti h) | 414 | 355 | 606 | 592 |

(continued)

|  | Reference* | 0.5THF:1Ti | 1.1 THF: 1Ti | 1.5 THF:ITi |
|---|---|---|---|---|
| MFR$_5$ (g/10min) | 3.2 | 2.12 | 1.2 | 1.23 |
| MFR$_{21}$ (g/10 min) | 33.2 | 25.2 | 7.3 | 12.6 |
| Co-monomer content (wt%) | 7.3 | 7.3 | 4.3 | 5 |
| MW | 133,000 | 146,000 | 221,000 | 172,000 |
| MN | 26,000 | 29,500 | 57,500 | 41,600 |
| MWD | 5 | 4.9 | 3.9 | 4.1 |
| ETA (1kPa) |  | 16,200 |  | 31,200 |
| SHI (1/100) |  | 4.1 |  | 3.9 |
| Density (kg/m$^3$) | 919.7 | 920.2 | 922.7 | 923.4 |
| XS (wt%) | 12.1 | 9.5 | 2.6 | 3.6 |
| Melt Temperature (°C) | 120.3 | 121.3 | 121 | 120.9 |
| Crystallinity (%) | 37.2 | 41 | 47.2 | 43 |
| * Neat catalyst | | | | |

The examples clearly show that THF, as an electron donor in a ZN catalyst, has a different affect on the MWD of the lower molecular weight polymer compared to the higher molecular weight component. The examples show that there is essentially no affect on the MWD of the LMW component, whereas the MWD of the HMW component is clearly decreased.

## Claims

1. A method for tailoring the molecular weight distribution of a multimodal (e.g. bimodal) ethylene polymer having a lower molecular weight component and a higher molecular weight component comprising polymerising ethylene and optionally at least one further alpha olefin in at least two stages, wherein at least one stage is carried out in a slurry phase in the presence of a Ziegler Natta catalyst comprising an electron donor which is an ether.

2. A method as claimed in claim 1, wherein at least a first and a second stage are carried out in the presence of the same Ziegler Natta catalyst.

3. A method as claimed in claim 2, wherein said Ziegler Natta catalyst decreases the MWD of the higher molecular weight component but has substantially no affect on the MWD of the lower molecular weight component.

4. A method as claimed in any one of claims 1 to 3, wherein at least one stage is carried out in the gas phase.

5. A method for preparing a multimodal (e.g. bimodal) ethylene polymer comprising:

   in a first slurry phase stage, polymerising ethylene and optionally at least one further alpha olefin with a Ziegler Natta catalyst comprising an electron donor; and
   in a second, preferably gas phase stage, polymerising ethylene and optionally at least one further alpha olefin in the presence of the same catalyst; wherein
   said electron donor is an ether.

6. A method as claimed in any one of claims 1 to 5, wherein said ethylene polymer is a copolymer.

7. A method as claimed in any one of claims 1 to 6, wherein the first stage produces a lower molecular weight homopolymer and the second stage produces a higher molecular weight copolymer.

8. A method as claimed in any preceding claim, wherein said polymer comprises a lower molecular weight component and a higher molecular weight component in a weight ratio of 10:90 to 90:10.

9. A method as claimed in any preceding claim, wherein said electron donor is selected from an alkyl ether of the formula $R^1OR^2$ wherein R' and $R^2$, which may be identical or different, are $C_{1-8}$ alkyl or together form a ring comprising 4 to 12 carbon atoms

10. A method as claimed in claim 9, wherein said electron donor is THF.

11. A method as claimed in any preceding claim, wherein the molar ratio of electron donor to Ti in said catalyst is 0.1 to 1.6:1.

12. A method as claimed in any preceding claim, wherein said ethylene polymer is linear low density polyethylene.

13. A Ziegler Natta catalyst comprising an ether electron donor, wherein the molar ratio of electron donor to Ti in said catalyst is 0.1 to 1.6:1.

14. A method for making a Ziegler Natta catalyst comprising an ether electron donor wherein the molar ratio of electron donor to Ti in said catalyst is 0.1 to 1.6:1, said method comprising mixing said Ziegler Natta catalyst with said ether electron donor in an appropriate amount and optionally drying

15. A polymer (e.g. copolymer) obtainable by a method as claimed in any one of claims 1 to 12.

16. Use of a polymer (e.g. copolymer) as claimed in claim 15 for the manufacture of an article, preferably film or pipe.

EP 1 780 225 A1

SEC / LABORATORY SERVICES / BOREALIS FINLAND

SEC / LABORATORY SERVICES / BOREALIS FINLAND

**European Patent Office**

**PARTIAL EUROPEAN SEARCH REPORT**

which under Rule 45 of the European Patent Convention shall be considered, for the purposes of subsequent proceedings, as the European search report

Application Number

EP 05 25 6756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 903 356 A (MITSUI CHEMICALS, INC) 24 March 1999 (1999-03-24) * the whole document * | 1-16 | INV. C08F4/649 C08F4/651 |
| X | US 6 124 412 A (BIN-TALEB ET AL) 26 September 2000 (2000-09-26) * the whole document * | 1-16 | |
| X | EP 0 034 935 A (SUMITOMO CHEMICAL COMPANY, LIMITED) 2 September 1981 (1981-09-02) * the whole document * | 1-16 | |
| X | US 5 037 908 A (TACHIKAWA ET AL) 6 August 1991 (1991-08-06) * the whole document * | 1-16 | |
| X | US 2002/103311 A1 (ABU-RAQABAH ATIEH ET AL) 1 August 2002 (2002-08-01) * the whole document * | 1-16 | |
| X | US 2004/030064 A1 (WANG ZHIWU [CN] ET AL) 12 February 2004 (2004-02-12) * the whole document *  -/-- | 1-16 | TECHNICAL FIELDS SEARCHED (IPC) C08F |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 3 May 2006 | Balmer, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent
Office

**PARTIAL EUROPEAN SEARCH REPORT**

Application Number

EP 05 25 6756

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| X | WO 98/02245 A (MOBIL OIL CORPORATION) 22 January 1998 (1998-01-22) * the whole document * ----- | 1-16 | |
| X | EP 0 778 289 A (MOBIL OIL CORPORATION) 11 June 1997 (1997-06-11) * the whole document * ----- | 1-16 | |
| X | US 2002/042472 A1 (ONG S. CHRISTINE ET AL) 11 April 2002 (2002-04-11) * examples 1-7 * ----- | 1-16 | |

TECHNICAL FIELDS
SEARCHED      (IPC)

EPO FORM 1503 03.82 (P04C10)

**European Patent Office**

**INCOMPLETE SEARCH**
**SHEET C**

Application Number

EP 05 25 6756

---

Claim(s) searched completely:
    1-6,9-16

Claim(s) not searched:
    7,8

Reason for the limitation of the search:

The wording used in claims 7 and 8 of lower and higher molecular weight polymers is unclear and therefore leads to all kind of documents from the prior art disclosing molecular weights....i.e. overflow of prior art documents (ex. IPC class c08f10/00)

## ANNEX TO THE EUROPEAN SEARCH REPORT
## ON EUROPEAN PATENT APPLICATION NO.

EP 05 25 6756

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2006

| Patent document cited in search report | | Publication date | Patent family member(s) | | Publication date |
|---|---|---|---|---|---|
| EP 0903356 | A | 24-03-1999 | CA | 2256707 A1 | 04-12-1997 |
| | | | CN | 1219941 A | 16-06-1999 |
| | | | DE | 69734156 D1 | 13-10-2005 |
| | | | WO | 9745463 A1 | 04-12-1997 |
| | | | JP | 3749547 B2 | 01-03-2006 |
| | | | KR | 2000016063 A | 25-03-2000 |
| | | | US | 2001025090 A1 | 27-09-2001 |
| US 6124412 | A | 26-09-2000 | NONE | | |
| EP 0034935 | A | 02-09-1981 | GB | 2071118 A | 16-09-1981 |
| | | | JP | 56116706 A | 12-09-1981 |
| US 5037908 | A | 06-08-1991 | AU | 5166785 A | 03-07-1986 |
| | | | CA | 1266856 A1 | 20-03-1990 |
| | | | DE | 3581204 D1 | 07-02-1991 |
| | | | EP | 0201647 A1 | 20-11-1986 |
| | | | JP | 61151208 A | 09-07-1986 |
| US 2002103311 | A1 | 01-08-2002 | NONE | | |
| US 2004030064 | A1 | 12-02-2004 | AU | 2003246109 A1 | 04-05-2004 |
| | | | CA | 2488704 A1 | 22-04-2004 |
| | | | WO | 2004033504 A1 | 22-04-2004 |
| | | | CN | 1463991 A | 31-12-2003 |
| | | | DE | 10392773 T5 | 04-08-2005 |
| | | | JP | 2005529230 T | 29-09-2005 |
| WO 9802245 | A | 22-01-1998 | AU | 715831 B2 | 10-02-2000 |
| | | | AU | 3578797 A | 09-02-1998 |
| | | | CA | 2260026 A1 | 22-01-1998 |
| | | | EP | 0910470 A1 | 28-04-1999 |
| | | | JP | 2000514492 T | 31-10-2000 |
| | | | KR | 2000023620 A | 25-04-2000 |
| | | | TW | 494111 B | 11-07-2002 |
| EP 0778289 | A | 11-06-1997 | NONE | | |
| US 2002042472 | A1 | 11-04-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004055065 A
- WO 0058374 A
- WO 02074818 A
- US 5055535 A
- EP 0754708 A

- EP 688794 A
- WO 0155230 A
- EP 0949274 A
- WO 2004055068 A
- EP 949274 A

**Non-patent literature cited in the description**

- Modelling, Estimation and Control of Product Properties in a Gas Phase Polyethylene Reactor. **K. B. MCAULEY.** Thesis. McMaster University, August 1991
- **K. MCAULEY ; J. MCMACGREGOR.** *AIChE Journal,* vol. 37 (6), 825-835

- **B. HAGSTRÖM.** Prediction of melt flow rate (MFR) of bimodal polyethylenes based on MFR of their components. *Conference on Polymer Processing (The Polymer Processing Society), Extended Abstracts and Final Programme,* 19 August 1997, vol. 4, 13